# EUROPEAN PATENT APPLICATION

(11) **EP 1 465 005 A1**
(43) Date of publication of application: **06.10.2004**
(21) Application number: 02788769.4
(22) Date of filing: 10.12.2002
(51) Int. Cl.: G02F 1/141

(54) **LIQUID CRYSTAL DISPLAY CELL**

(30) Priority: 17.12.2001 JP 2001383662
(71) Applicant: Catalysts & Chemicals Industries Co., Ltd., Kawasaki-shi, Kanagawa 210 (JP); Kobayashi, Shunsuke, Nerima-ku Tokyo 178-0065 (JP)
(72) Inventor: KOBAYASHI, Shunsuke, Nerima-ku, Tokyo 178-0065 (JP); YOSHIDA, Nobuaki, Wakamatsu P. C.&C. Ind. Co. Ltd., Kitakyushu-shi, Fukuoka 808-0027 (JP); TONAI, Atsushi, Wakamatsu P. C.&C. Ind. Co. Ltd., Kitakyushu-shi, Fukuoka 808-0027 (JP)
(74) Representative: Thomson, James B.
(86) International application number: PCT/JP2002/012916
(87) International publication number: WO 2003/052505

(57) **Abstract**

There is provided by the present invention a liquid crystal display cell having high-speed response, wide angle of view, bistable memory properties and high contrast and applicable to large-screen display. The liquid crystal display cell of the invention is a liquid crystal display cell comprising a pair of substrates with transparent electrode film and a liquid crystal, at least one of said substrates having a transparent electrode film, a transparent film and an alignment layer laminated successively on a surface of a substrate, said pair of substrates being arranged at a given distance in such a manner that the transparent electrode films face each other, said liquid crystal being enclosed in a gap formed between the pair of substrates with transparent electrode film, wherein (i) the transparent film comprises a matrix (A) and ion-adsorbing inorganic oxide fine particles (B), (ii) the ion-adsorbing inorganic oxide fine particles have an average particle diameter of 1 nm to 50 nm, (iii) the alignment layer has an average surface roughness of not more than 7 nm, and (iv) the liquid crystal is a ferroelectric liquid crystal or an antiferroelectric liquid crystal.

## Description

### TECHNICAL FIELD

The present invention relates to liquid crystal display cells having high-speed response, excellent impact resistance, wide angle of view, bistable memory properties, high contrast and excellent large-screen display ability.

### BACKGROUND ART

There have been heretofore known liquid crystal display cells obtained by arranging a pair of substrates with transparent electrode film, in each of which a transparent electrode film such as ITO and an alignment layer composed of a polymer such as polyimide are laminated successively on a surface of a glass substrate, through spacers in such a manner that the transparent electrode films face each other and enclosing a liquid crystal in a gap of a given width formed by the spacers.

In the above liquid crystal display cells, the alignment layer is marred by foreign matters introduced inside the liquid crystal cell or the spacers in the production process. As a result, conduction is made between the upper and the lower electrodes, and display failures attributable to the conduction sometimes occur.

On this account, it has been proposed to provide an insulating film between the transparent electrode film and the alignment layer in the substrate with transparent electrode film of the liquid crystal display cells of the above type (Japanese Patent Laid-Open Publication No. 260021/1985, Japanese Patent Laid-Open Publication No. 150116/1989, Japanese Patent Laid-Open Publication No. 221923/1990, etc.).

In such liquid crystal display cells as mentioned above, a resin of high hydrophobicity such as a polyimide resin is frequently used for the alignment layer. When an alignment layer composed of such a highly hydrophobic resin is formed on the insulating film, adhesion between the insulating film and the alignment layer becomes insufficient, and the liquid crystal display cells sometimes suffer display nonuniformity. Therefore, in order to form an insulating film having excellent adhesion to the alignment layer, one of the present applicants proposes, in Japanese Patent Laid-Open Publication No. 247427/1992, a coating solution containing an inorganic compound having a specific particle diameter.

On the other hand, improvements of liquid crystal materials used for the above-mentioned various liquid crystal display devices have been made to reduce power consumption. In order to reduce power consumption, liquid crystals having functional groups of strong polarity which exhibit a low threshold voltage have been employed. Panels using such liquid crystals, however, have problems of display failures attributable to mobil ions in the liquid crystal as compared with conventional panels for liquid crystal display devices. Therefore, decrease of the amount of mobil ions (ionic impurities) in the liquid crystal has been made, but it is difficult to highly and effectively remove the mobil ions, and reduction of power consumption or solution to the problem of display failures has not been achieved yet.

On this account, one of the present applicants discloses, in Japanese Patent Laid-Open Publication No. 169766/2000, that by the formation of a transparent film containing fine particles having ion adsorption ability, mobil ions are adsorbed by the fine particles and removed, and as a result, a liquid crystal display cell which needs only small power consumption and is free from display failure is obtained.

In addition, it is estimated that the amount of information transmitted becomes 10³ to 10⁶ times in the coming 21th century with the development of multi-media network, and it is required that liquid crystal display devices are capable of displaying beautiful animations.

Because the response time of nematic liquid crystals widely used at present is of the order of millisecond, display of beautiful animations is impossible, so that studies of practical use of LCD panels using ferroelectric liquid crystals (FLC) or the like as liquid crystal display devices of high-speed response have been extended. The display devices using ferroelectric liquid crystals usually have cells of small thickness and are used in a surface stabilized state, and it is said that the display devices in this case have high-speed response of microseconds, wide angle of view and bistable memory properties.

However, it is difficult to control alignment of the liquid crystal, and by the influence of the interfacial state of the alignment layer, structural defect of the liquid crystal is sometimes brought about. As a result, a problem of insufficient display quality is caused.

One of the present inventors has found and disclosed that the above structural defect does not occur when an extremely smooth, low-pretilted alignment layer is used (Kobayashi, et al., the September 1999 issue of "Monthly Display", p. 59).

However, it is sometimes difficult to obtain a defect-free state depending upon the surface state of a supporting layer such as a transparent electrode film, and it is difficult to obtain an alignment layer of a sufficiently smooth surface with good reproducibility. Moreover, when an impact is given to the display panel, orientation properties (crystallizability) are deteriorated to lower display ability or to make displaying impossible.

Then, the present inventors have further earnestly studied supporting layers for the alignment layers. As a result, they have found the following. That is to say, when an alignment layer is formed on a transparent film containing ion-adsorbing inorganic oxide fine particles having diameters of a specific range, such problems associated with the prior art as mentioned above are solved. Then, an alignment layer having excellent smooth surface is obtained. On this account, orientation properties of the liquid crystal are enhanced to thereby bring about no structural defect, stable orientation properties are exhibited even if an impact of a certain extent is given, and the amount of mobil ions in the liquid crystal layer can be decreased. Therefore, electro-optical properties of a liquid crystal cell can be improved, for example, an operating voltage can be lowered and voltage retention can be improved. Based on the finding, the present invention has been accomplished.

### OBJECT OF THE INVENTION

It is an object of the present invention to provide a liquid crystal display cell which is excellent in orientation properties of a ferroelectric liquid crystal or an antiferroelectric liquid crystal, has high-speed response, wide angle of view, bistable memory properties and high contrast, and is applicable to large-screen display.

### SUMMARY OF THE INVENTION

The liquid crystal display cell according to the present invention is a liquid crystal display cell comprising a pair of substrates with transparent electrode film and a liquid crystal, at least one of said substrates having a transparent electrode film, a transparent film and an alignment layer laminated successively on a surface of a substrate, said pair of substrates being arranged at a given distance in such a manner that the transparent electrode films face each other, said liquid crystal being enclosed in a gap formed between the pair of substrates with transparent electrode film, wherein:
(i) the transparent film comprises a matrix (A) and ion-adsorbing inorganic oxide fine particles (B),
(ii) the ion-adsorbing inorganic oxide fine particles have an average particle diameter of 1 nm to 50 nm,
(iii) the alignment layer has an average surface roughness of not more than 7 nm, and
(iv) the liquid crystal is a ferroelectric liquid crystal or an antiferroelectric liquid crystal.

The ferroelectric liquid crystal is preferably a smectic liquid crystal or a chiral smectic liquid crystal.

The liquid crystal display cell preferably further comprises a polymer stabilizer together with the ferroelectric liquid crystal or the antiferroelectric liquid crystal.

The polymer stabilizer is preferably a photo-functional resin.

### BRIEF DESCRIPTION OF THE DRAWING

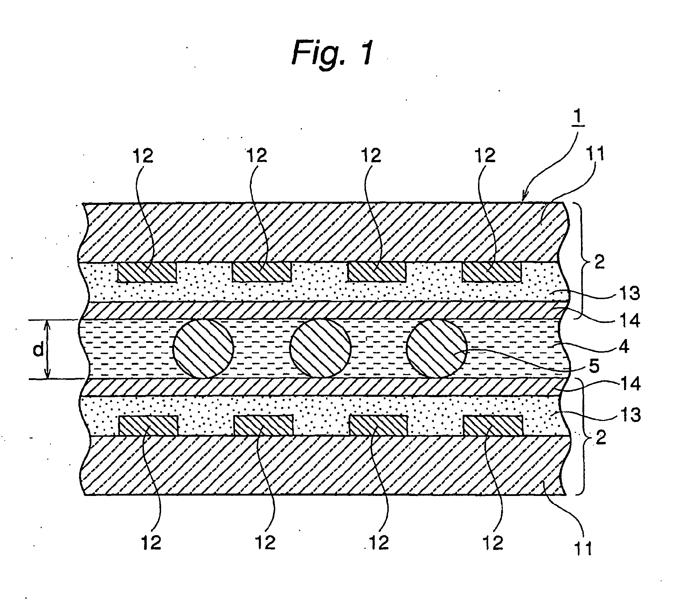

Fig. 1 is a schematic sectional view of a liquid crystal display cell of the present invention.
1: liquid crystal display cell
2: substrate with transparent electrode film
4: liquid crystal
5: spacer
11: glass substrate
12: transparent electrode film
13: transparent film
14: alignment layer

### BEST MODE FOR CARRYING OUT THE INVENTION

An embodiment of the liquid crystal display cell of the present invention is described in detail hereinafter.

In the liquid crystal display cell of the invention, a pair of substrates with transparent electrode film, at least one of which has a transparent electrode film, a transparent film and an alignment layer laminated successively on a surface of a substrate, are arranged at a given distance in such a manner that the transparent electrode films face each other, and in a gap formed between the pair of substrates with transparent electrode film, a liquid crystal is enclosed.

The substrate is not specifically restricted. Examples of the substrates include a glass substrate, a ceramic substrate, a metal substrate and a plastic substrate. The substrate is appropriately selected therefrom according to the purpose. One of the substrates has only to be transparent, so that two substrates made of different materials may be used as a pair.

The liquid crystal display cell of the invention is described below referring to Fig. 1. Fig. 1 is a schematic sectional view of an embodiment of the liquid crystal display cell of the invention.

The liquid crystal display cell 1 is formed by arranging a pair of substrates with transparent electrode film 2, 2, in each of which a transparent electrode film 12, a transparent film 13 and an alignment layer 14 are laminated successively on a surface of a glass substrate 11, at a given distance d in such a manner that the transparent electrode films 12, 12 face each other and enclosing a liquid crystal 4 in a gap formed between the pair of substrates with transparent electrode film 2, 2. Between the substrates with transparent electrode film 2, 2, plural spacers 5 may be interposed to make the given distance d.

The transparent film 13 is a film formed by applying a transparent film-forming coating solution described later onto the substrate having been provided with the transparent electrode film 12 and then drying the coated layer.

The transparent film 13 has an extremely smooth surface, high surface hardness, excellent transparency, excellent mar resistance, high insulation resistance and good adhesion to the alignment layer, and can effectively decrease the amount of mobil ions in the liquid crystal panel.

In the present invention, various changes and modifications may be made without departing from the scope of the present invention. For example, a substrate with transparent electrode film further having an alkali passivation film, such as a SiO₂ film, between the glass substrate 11 and the transparent electrode film 12 may be used in the liquid crystal display cell of the invention.

The "average surface roughness" referred to herein with regard to the surface smoothness of the transparent electrode film, the transparent film and the alignment layer is in accordance with JIS B 0601-1982 and is expressed as a value of two times the center line average roughness (Ra), i.e., a value of 2(Ra). The surface irregularities and the heights thereof are measured by an atomic force microscope (AFM) (manufactured by Seiko Denshi Kogyo K.K., SPI3700).

### Transparent electrode film 12

As the transparent electrode film 12 formed on the surface of the glass substrate, a conventional transparent electrode film is employable, and examples thereof include films of conductive oxides such as ITO and films of metals such as gold and silver. Although the average surface roughness of the transparent electrode film is not specifically restricted, it is preferably not more than 30 nm, more preferably not more than 10 nm. If the average surface roughness exceeds 30 nm, the finally obtained alignment layer (formed on the transparent film) does not have an average surface roughness of not more than 7 nm in some cases, and when a ferroelectric liquid crystal is used, structural defect is sometimes brought about to thereby lower display ability.

The transparent electrode film can be produced by a conventional method such as a CVD method or a coating method.

The thickness of the transparent electrode film has only to be such a thickness as is capable of retaining conduction and is not detrimental to the transparency.

### Transparent film 13

The transparent film is formed on the transparent electrode film, comprises a matrix component (A) and ion-adsorbing inorganic oxide fine particles (B) and functions as an insulating film.

The thickness of the transparent film is in the range of preferably 10 to 500 nm, more preferably 30 to 200 nm.

If the thickness of the transparent film is less than the lower limit of the above range, pinhole defect is liable to occur in the transparent film, and shedding of transparent film is liable to occur on the transparent film. Thereby, uncoated portions tend to be produced. As a result, the transparent film neither functions as an insulating film nor has a uniform surface roughness.

If the thickness of the transparent film exceeds the upper limit of the above range, voltage loss attributable to the transparent film is increased in the driving of the liquid crystal panel by application of a voltage, and hence power consumption of the liquid crystal panel is increased to thereby lower serviceability.

The transparent film desirably has pores having a pore volume of 0.01 to 0.3 ml/g, preferably 0.05 to 0.2 ml/g, and an average pore diameter of 1 to 10 nm, preferably 2 to 8 nm.

If the pore volume is less than 0.01 ml/g, ion adsorption ability of the inorganic oxide fine particles is not sufficiently exhibited because of too few pores. If the pore volume exceeds 0.3 ml/g, strength of the film becomes insufficient.

If the average pore diameter is less than 1 nm, ion diffusion rate is slow when a voltage is applied, and ion adsorption ability of the ion-adsorbing inorganic oxide fine particles is not sufficiently exhibited in some cases. If the average pore diameter exceeds 10 nm, strength of the film becomes insufficient, and the average surface roughness of the transparent film sometimes exceeds 10 nm.

The pore volume and the average pore diameter of the transparent film are determined by peeling a transparent film formed on a substrate and measuring a pore volume and an average pore diameter of the peeled transparent film by a N₂ adsorption method.

The matrix component (A) to constitute the transparent film is desirably derived from at least one matrix-forming component selected from (a) an acetylacetonato chelate compound, (b) an organosilicon compound, (c) polysilazane and (d) metal alkoxide.

The acetylacetonato chelate compound (a) has excellent film-forming properties, and besides, when a matrix component derived from the acetylacetonato chelate compound (a) is used, a transparent film having excellent alkali resistance, acid resistance, salt water resistance, water resistance and solvent resistance can be formed.

A transparent film containing a matrix component derived from the organosilicon compound (b) is excellent in mar resistance, acid resistance, alkali resistance, water resistance and insulation properties.

A transparent film containing a matrix component derived from the polysilazane (c) is almost free from cracks.

A transparent film containing a matrix component derived from the metal alkoxide (d) is excellent in mar resistance, acid resistance, alkali resistance, water resistance and insulation properties.

When two or more matrix-forming components are used in combination, the weight ratio between the components is preferably as follows. That is to say, when the components derived from the acetylacetonato chelate compound (a), the organosilicon compound (b), the polysilazane (c) and the metal alkoxide (d) in the matrix component are each converted to an oxide or a nitride, the weight ratio between the components preferably satisfies the following relation.

0.001≤M¹Oₓ/(SiO₂+SiN+M²Oₓ)≤10

That is, the component derived from the acetylacetonato chelate compound (a), the component derived from the organosilicon compound (b), the component derived from the polysilazane (c) and the component derived from the metal alkoxide (d) are converted into M¹Oₓ, SiO₂, SiN and M²Oₓ, respectively,

When the component derived from the acetylacetonato chelate compound especially is contained and the above weight ratio is not less than 0.001, a film having excellent alkali resistance, acid resistance, salt water resistance, water resistance and solvent resistance can be obtained.

If the weight ratio exceeds 10, transparency of the film tends to be lowered, and adhesion of the transparent film to the alignment layer formed thereon tends to be lowered.

The compounding ratio between the component derived from the organosilicon compound, the component derived from the polysilazane and the component derived from the metal alkoxide preferably satisfies the relation 0≤M²Oₓ/(SiO₂+SiN+M²Oₓ)≤1.0.

The ion-adsorbing inorganic oxide fine particles (B) have an average particle diameter of 1 nm to 50 nm, preferably 2 nm to 40 nm.

When the average particle diameter of the ion-adsorbing inorganic oxide fine particles (B) is in the above range, the transparent film having a thickness of 10 to 500 nm formed on the transparent electrode film has good reproducibility and has an average surface roughness of not more than 10 nm in spite of the surface roughness of the transparent electrode film. Hence, the transparent film exhibits excellent adhesion to a hydrophobic alignment layer, and on the transparent film, a smooth alignment layer having an average surface roughness of not more than 7 nm, preferably not more than 3 nm, can be formed with good reproducibility. The average particle diameter of the inorganic oxide fine particles can be measured by a laser Doppler method or TEM observation.

Examples of the ion-adsorbing inorganic oxide fine particles (B) include fine particles of inorganic oxides, such as SiO₂, Al₂O₃, ZrO₂, TiO₂, SnO₂, In₂O₃ and Sb₂O₅, and fine particles of composite inorganic oxides, such as SiO₂·Al₂O₃, SiO₂·TiO₂, In₂O₃·SnO₂, Sb₂O₅·SnO₂ and SnO₂·In₂O₃·Sb₂O₅ or solid solutions thereof. Also employable are mixtures of two or more kinds of these oxides.

Of the above oxides, preferable as the ion-adsorbing inorganic oxide fine particles are those having water of crystallization (may be hydroxyl group). More specifically, preferable are inorganic metal oxide fine particles which have a number n of moles of water of 0.02 to 5 when the inorganic oxide is represented by MOₓ·nH₂O and when the water of crystallization other than water of adhesion, the structural hydroxyl group and the surface hydroxyl group are converted to H₂O. The number n of moles of water is preferably in the range of 0.1 to 5.

If the number n of moles of water such as water of crystallization in the ion-adsorbing inorganic oxide fine particles is less than 0.02, ion adsorption capability is too small and ions in the liquid crystal cannot be adsorbed effectively. It is difficult to obtain ion-adsorbing inorganic oxide fine particles having a number of moles of more than 5. Even if such particles are obtained, water molecules are sometimes eliminated from the inorganic oxide fine particles to inhibit alignment of the liquid crystal.

The number n of moles of water in the ion-adsorbing inorganic oxide fine particles can be determined as follows. The ion-adsorbing inorganic oxide fine particles are dried at 120°C until a constant weight is reached, then the ion-adsorbing inorganic oxide fine particles are subjected to differential thermal analysis, and the amount of water decreased by the time the temperature becomes 500°C is calculated as a number of moles of water based on 1 mol of the total of the inorganic metal oxides.

The ion-adsorbing inorganic oxide fine particles (B) are preferably fine particles capable of adsorbing inorganic and/or organic ions present as impurities in the liquid crystal or eluted into the liquid crystal from the alignment layer or a sealing material, and these fine particles preferably have an ion adsorption capability of 0.1 to 3.0 mmol/g.

If the ion adsorption capability is less than the lower limit of the above range, decrease of the amount of mobil ions is insufficient, and hence voltage retention properties are lowered and reliability is lowered. In addition, display failures take place or power consumption cannot be reduced in some cases.

It is difficult to obtain inorganic oxide fine particles (B) having an ion adsorption capability of higher than the upper limit of the above range.

Examples of ions capable of being adsorbed by the ion-adsorbing inorganic oxide fine particles (B) include inorganic cations, such as Na⁺, K⁺, Rb⁺, Cs⁺, Li⁺, Ag⁺, Mg²⁺, Ca²⁺, Sr⁺, Ba²⁺ and NH₄⁺, inorganic anions, such as F⁻, Cl⁻ and SO₄²⁻, organic anions, such as formic acid ion and acetic acid ion, and organic cations, such as tetraethylammonium ion and tetrapropylammonium ion.

The ion adsorption capability of the ion-adsorbing inorganic oxide fine particles is measured in the following manner.

### (1) Measurement of inorganic cation adsorption capability

To 100 g of a NaCl aqueous solution having a concentration of 1% by weight, 1.5 g of ion-adsorbing inorganic oxide fine particles having been dried to constant weight at 120°C are added, and they are stirred at room temperature (25°C) for 15 hours. Thereafter, the mixture is filtered to obtain a filtrate. Then, a Na ion concentration of the filtrate is analyzed by atomic absorption spectrometry, and from a difference in the Na ion concentration between the filtrate and the original NaCl aqueous solution, inorganic cation adsorption capability (mmol/g) of the ion-adsorbing inorganic oxide fine particles is determined.

### (2) Measurement of inorganic anion adsorption capability

To 100 g of a NaCl aqueous solution having a concentration of 1% by weight, 1.5 g of ion-adsorbing inorganic oxide fine particles having been dried to constant weight at 120°C are added, and they are stirred at room temperature (25°C) for 15 hours. Thereafter, the mixture is filtered to obtain a filtrate. Then, a Cl ion concentration of the filtrate is analyzed by atomic absorption spectrometry, and from a difference in the Cl ion concentration between the filtrate and the original NaCl aqueous solution, inorganic anion adsorption capability (mmol/g) of the ion-adsorbing inorganic oxide fine particles is determined.

### (3) Measurement of organic cation adsorption capability

To 100 g of a tatermethylammonium hydroxide aqueous solution having a concentration of 1% by weight, 1.5 g of ion-adsorbing inorganic oxide fine particles having been dried to constant weight at 120°C are added, and they are stirred at room temperature (25°C) for 15 hours. Thereafter, the mixture is filtered to obtain a filtrate. Then, a tetramethylammonium ion concentration of the filtrate is analyzed by ion chromatography, and from a difference in the concentration between the filtrate and the original aqueous solution, organic cation adsorption capability (mmol/g) of the ion-adsorbing inorganic oxide fine particles is determined.

### (4) Measurement of organic anion adsorption capability

To 100 g of an acetic acid aqueous solution having a concentration of 1% by weight, 1.5 g of ion-adsorbing inorganic oxide fine particles having been dried to constant weight at 120°C are added, and they are stirred at room temperature (25°C) for 15 hours. Thereafter, the mixture is filtered to obtain a filtrate. Then, an acetic acid ion concentration of the filtrate is analyzed by ion chromatography, and from a difference in the concentration between the filtrate and the original aqueous solution, organic anion adsorption capability (mmol/g) of the ion-adsorbing inorganic oxide fine particles is determined.

In addition to the ion-adsorbing inorganic oxide fine particles (B), insulating or conductive inorganic compound particles may be used in combination, when needed.

Although the conductive inorganic oxide fine particles are used preferably in a state of a sol wherein these particles are dispersed in water or an organic solvent, conductive inorganic oxide fine particles in a state other than the sol state may be used provided that they can be monodispersed or nearly monodispersed in the transparent film-forming coating solution.

The content of the matrix component (A) in the transparent film is preferably in the range of 30 to 35% by weight in terms of an oxide or a nitride, and the content of the ion-adsorbing inorganic oxide fine particles is preferably in the range of 5 to 70% by weight in terms of an oxide.

When the matrix component and the ion-adsorbing inorganic oxide fine particles are present in the above amounts in the transparent film, even an alignment layer composed of a highly hydrophobic resin such as a polyimide resin can be formed on the surface of the transparent film with good adhesion to the transparent film. The transparent film can effectively decrease the amount of ions in the liquid crystal panel.

When the surface roughness of the transparent electrode film is not more than 30 nm, a smooth transparent film having an average surface roughness of not more than 10 nm can be formed, and on such a transparence film, an alignment layer composed of a highly hydrophobic resin such as a polyimide resin can be formed with good adhesion to the transparent film. Further, the alignment layer formed on the surface of the transparent film has a smooth surface having an average surface roughness of not more than 7 nm, causes no structural defect and can favorably orientate the liquid crystal. Therefore, a liquid crystal display cell having high-speed response, wide angle of view, bistable memory properties, high contrast, large-screen display ability, etc. can be obtained.

When the ion-adsorbing inorganic oxide fine particles are present in the transparent film, inorganic cations, inorganic anions, organic cations and organic anions present in the liquid crystal, the alignment layer and the material or eluted therefrom can be adsorbed, so that the liquid crystal can be made substantially free from ions. On this account, the operating voltage can be lowered, the voltage retention can be increased, and the power consumption can be reduced.

Especially when the surface roughness of the transparent electrode film is not more than 30 nm, a smooth transparent film having an average surface roughness of not more than 10 nm can be formed, and on such a transparence film, an alignment layer composed of a highly hydrophobic resin such as a polyimide resin can be formed with good adhesion to the transparent film. Further, a smooth alignment layer having an average surface roughness of not more than 7 nm, causing no structural defect and favorably orientating the liquid crystal can be obtained. The average surface roughness referred to herein is expressed as a value of two times the center line average roughness (Ra) in JIS B 0601-1982.

The process for forming the transparent film is not specifically restricted, and for example, the transparent film can be formed by applying and drying (and calcining when necessary) the below-described transparent film-forming coating solution.

The transparent film-forming coating solution for use in the invention is a solution wherein a matrix component precursor (A') and the ion adsorbing inorganic oxide fine particles are dispersed in a mixed solvent of water and an organic solvent.

### (A') Matrix component precursor

As the matrix component precursor (A'), a compound selected from an acetylacetonato chelate compound, an organosilicon compound, polysilazane and metal alkoxide or a mixture of two or more compounds selected therefrom is employed.

### (a) Acetylacetonato chelate compound

The acetylacetonato chelate compound is a chelate compound having acetylacetone as a ligand and is a compound represented by the following chemical formula (1) or its condensate. 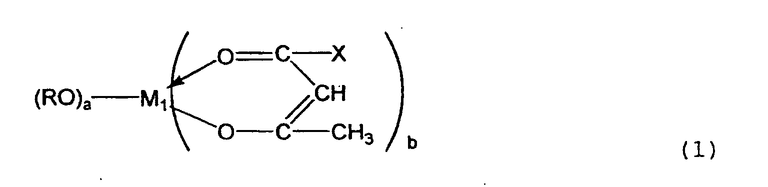 wherein a+b is a number of 2 to 4, a is a number of 0 to 3, b is a number of 1 to 4, R is -CₙH₂ₙ₊₁ (n=3 or 4), X is -CH₃, -OCH₃, -C₂H₅ or -OC₂H₅, and M¹ is an element selected from Group IB, Group IIA, Group IIB, Group IIIA, Group IIIB, Group IVA, Group IVB, Group VA, Group VB, Group VIA, Group VIIA and Group VIII, or vanadyl (VO).

Preferred combinations of the elements and the numbers represented by a, b and the like are as shown in the following table.

**Table 1**

| | | | |
|---|---|---|---|
| a | 0~1 | 0~2 | 0~3 |
| b | 1~2 | 1∼3 | 1~4 |
| a+b | 2 | 3 | 4 |
| M1 | Co,Cu,Mg, Mn,Pb,Ni, Zn, Sn, Ba, Be, VO | Al,Cr,Fe, V,Co,In, Ta,Y,B | Ti,Zr,Hf, Sb |

Examples of such acetylacetonato chelate compounds include dibutoxy-bisacetylacetonatozirconium, tributoxy-monoacetylacetonatozirconium, bisacetylacetonatolead, trisacetylacetonatoiron, dibutoxy-bisacetylacetonatohafnium and monoacetylacetonatotributoxyhafnium.

### (b) Organosilicon compound

As the organisilicon compound, an organosilicon compound represented by the following formula is employed.

Rₐ-Si(OR')₄₋ₐ (2)

wherein R is -CₙH₂ₙ₊₁, R' is -CₙH₂ₙ₊₁ or -C₂H₄OCₙH₂ₙ₊₁, a is an integer of 0 to 3, and n is an integer of 1 to 4.

Examples of such organosilicon compounds include tetramethoxysilane, tetraethoxysilane, monomethyltrimethoxysilane, monoethyltriethoxysilane, monoethyltrimethoxysilane and monomethyltriethoxysilane.

These organosilicon compounds may be used as they are or after partially hydrolyzed. The partial hydrolyzates can be obtained in accordance with usual methods heretofore used, for example, a method comprising mixing the organosilicon compound with an alcohol such as methanol or ethanol and adding water and an acid to the mixture to perform partial hydrolysis.

By applying the transparent film-forming coating solution containing the organosilicon compound onto a substrate and then drying and calcining the coated layer, a film having excellent mar resistance, acid resistance, alkali resistance, water resistance and insulation properties can be formed, and besides the surface of an alignment layer subsequently formed thereon can be made extremely smooth.

### (c) Metal alkoxide

As the metal alkoxide, a compound represented by the formula M²(OR)ₙ (wherein M² is a metal atom, R is an alkyl group or -CₘH₂ₘO₂ (m=3 to 10), n is the same integer as the valence of M²) or its condensate is preferable. Such compounds and condensates may be used in combination of two or more kinds. M² in the above formula is not specifically restricted provided that it is a metal, but M² is preferably Be, Al, Sc, Ti, V, Cr, Fe, Ni, Zn, Ga, Ge, As, Se, Y, Zr, Nb, In, Sn, Sb, Te, Hf, Ta, W, Pb, Bi, Ce or Cu.

Examples of the metal oxides preferably used include tetrabutoxyzirconium, diisopropoxy-dioctyloxytitanium and diethoxylead.

When the transparent film-forming coating solution containing the metal alkoxide is applied, then dried and calcined, the metal alkoxide is polymerization cured, whereby a film having excellent mar resistance, acid resistance, alkali resistance and insulation properties can be formed.

### (d) Polysilazane

As the polysilizane, polysilazane having a recurring unit represented by the following formula (3) is employed. 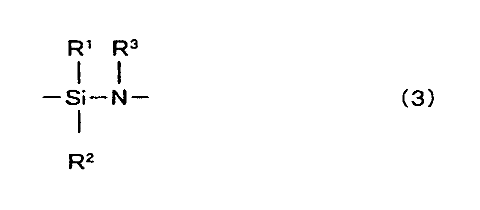 wherein R¹, R² and R³ are each a hydrogen atom or an alkyl group of 1 to 8 carbon atoms.

In the case where polysilazane having a recurring unit represented by the formula (3) is used as the matrix component precursor, polysilazane having a methyl group, an ethyl group or a propyl group as the alkyl group is preferable. In this case, there is no alkyl group to be decomposed in the heating process, and film shrinkage is little in the heating process. Therefore, cracks are hardly produced when shrinkage stress is applied to the film, and a transparent film almost free from cracks and having excellent surface smoothness can be obtained.

The polysilazane having a recurring unit represented by the formula (3) may be straight-chain or cyclic, or may be a mixture of straight-chain polysilanzane and cyclic polysilazane.

The polysilazane desirably has a number-average molecular weight of 500 to 10,000, preferably 1,000 to 4,000. If the number-average molecular weight is less than 500, low-molecular weight polysilazane evaporates in the heat curing process, and the resulting transparent film tends to be porous. If the number-average molecular weight exceeds 10,000, flowability of the coating solution tends to be lowered, and hence surface smoothness of the transparent film tends to be lowered.

The matrix component precursors mentioned above may be used singly or in combination of two or more kinds.

### Transparent film-forming coating solution

In the transparent film-forming coating solution preferably used in the invention, the matrix component precursor (A') and the ion-adsorbing inorganic oxide fine particles (B) are dispersed in a mixed solvent of water and an organic solvent.

Examples of the organic solvents used for the transparent film-forming coating solution include conventional organic solvents, such as alcohols, ethers, glycols and ketones. Such organic solvents may be used singly or in combination of two or more kinds.

The solids concentration of the coating solution is preferably not more than 15% by weight as a total value of the matrix component precursor (A') and the ion-adsorbing inorganic oxide fine particles (B) in terms of an oxide or a nitride.

If the solids concentration exceeds 15% by weight, storage stability of the coating solution tends to be lowered. If the solids concentration is extremely low, it is necessary to carry out coating operations many times in order to obtain the aimed film thickness. Therefore, a solids concentration of not less than 0.1% by weight is practical.

In the coating solution, the matrix component precursor (A') is preferably contained in such an amount that the amount of the matrix component in the resulting transparent film becomes 30 to 95% by weight in terms of an oxide or a nitride.

In the coating solution, the ion-adsorbing inorganic oxide fine particles (B) are preferably contained in such an amount that the amount of the ion-adsorbing inorganic oxide fine particles in the resulting transparent film becomes 5 to 70% by weight.

When the ion-adsorbing inorganic oxide fine particles are present in the above amount in the transparent film-forming coating solution, even an alignment layer composed of a highly hydrophobic resin such as a polyimide resin can be formed on a surface of a transparent film obtained from the coating solution with good adhesion to the transparent film. Further, a transparent film capable of effectively decreasing the amount of ions in the liquid crystal panel can be formed. If the amount of the ion-adsorbing inorganic oxide fine particles exceeds 70% by weight, adhesion between the transparent film and the transparent electrode film is lowered or the transparent film does not have an average surface roughness of not more than 10 nm in some cases.

Also when insulting or conductive inorganic compound fine particles are contained if desired in addition to the ion-adsorbing inorganic oxide fine particles, the ion-adsorbing inorganic oxide fine particles and the fine particles other than the ion-adsorbing inorganic oxide fine particles are preferably present in the coating solution in such amounts that the total amount of these fine particles in the resulting transparent film becomes 5 to 70% by weight in terms of an oxide or a nitride.

The water concentration of the coating solution is preferably in the range of 0.1 to 50% by weight. If the water concentration is less than 0.1% by weight, hydrolysis, condensation polymerization and complexing (adherence) of the acetylacetonato chelate compound, the organosilicon compound, the polysilazane and the metal alkoxide cannot be carried out sufficiently, and mar resistance and durability of the resulting film tend to be lowered. If the water concentration exceeds 50% by weight, the coating solution is liable to be repelled by the substrate in the coating process, and film formation becomes difficult.

By controlling the mixing ratio between the matrix component precursor (A') and the ion-adsorbing inorganic oxide fine particles (B), the type of the metal contained in the matrix component precursor (A'), the type of the ion-adsorbing inorganic oxide fine particles (B) contained in the coating solution, refractive index and dielectric constant of the resulting film can be freely controlled.

When a transparent film controlled in its refractive index is formed on the transparent electrode film of the substrate with transparent electrode film, for example, the refractive index of the transparent film becomes higher than that of the alignment layer to be formed thereon, the electrode from cannot be seen through the alignment layer.

### Process for forming transparent film

The transparent film can be formed by a process comprising applying the transparent film-forming coating solution onto a surface of a substrate, such as a glass substrate having a transparent electrode film, by dipping, spinner method, spraying, roll coating, flexographic printing or the like and then drying the coated layer at a temperature of room temperature to 90°C, heating the dried layer to a temperature of not lower than 200°C, occasionally not lower than 300°C, to cure the layer.

The transparent film formed on the substrate may be a film having been subjected to curing acceleration treatment in the following manner.

The curing acceleration treatment is, for example, a treatment of irradiating the uncured film with electromagnetic wave of shorter wavelength than that of visible light after coating or after drying or during drying, or a treatment of exposing the uncured film to an atmosphere of a gas that accelerates curing reaction.

Examples of the electromagnetic waves used for the irradiation of the uncured film before heating include ultraviolet rays, electron rays, X rays and y rays. Of these, ultraviolet rays are particularly preferable.

In the irradiation with ultraviolet rays, it is preferable to irradiate the film with ultraviolet rays having an energy quantity of not less than 100 mJ/cm², preferably not less than 1000 mJ/cm², using, for example, a high-pressure mercury lamp having the maximum emission intensity at about 250 nm and 360 nm and having a light intensity of not less than 10 mW/cm² as a source of ultraviolet rays.

Examples of the gases used for accelerating curing reaction of the uncured film before heating include ammonia and ozone. In the gas treatment, it is desirable to expose the uncured film to the active gas atmosphere having a gas concentration of 100 to 100,000 ppm, preferably 1,000 to 10,000 ppm.

The gas treatment may be carried out after heat curing, and also in this case, the same effect can be obtained.

By the curing acceleration treatment, condensation polymerization and complexing of the acetylacetonato chelate compound, the organosilicon compound, the polysilazane and the metal alkoxide contained in the transparent film are accelerated, and at the same time, evaporation of water and the solvent remaining in the film is also accelerated. Therefore, heat curing conditions required in the subsequent heating step, such as heating temperature and heating time, are lightened, and production of the substrate with transparent electrode film can be efficiently carried out.

### Alignment layer 14

The alignment layer used in the liquid crystal display cell of the invention has an average surface roughness of not more than 7 nm, preferably not more than 3 nm. If the average surface roughness of the alignment layer exceeds 7 nm, alignment of the liquid crystal becomes nonuniform, and structural defect (zigzag defect) sometimes occurs to cause a problem of lowering of display ability.

The alignment layer for use in the invention is preferably an alignment layer composed of a polyimide resin. From the polyimide resin, an alignment layer having a small average surface roughness and excellent smoothness tends to be obtained. As the polyimide resin, SE-150, RN1199 available from Nissan Chemical industries, Ltd., RIXON ARIGHNER PIA-2910 available from Chisso Corporation, or the like is recommended.

The alignment layer is formed on the transparent film having an average surface roughness of not more than 10 nm.

When the average surface roughness of the alignment layer is not more than 7 nm, no structural defect (zigzag defect) occurs even when a ferroelectric liquid crystal or an antiferroelectric liquid crystal is used, and a liquid crystal display cell having high-speed response, wide angle of view, bistable memory properties, high contrast and large-screen display ability can be obtained.

### Process for forming alignment layer

The alignment layer can be formed by a heretofore known process comprising applying, for example, an alignment layer-forming resin coating material described below by flexographic printing, dipping, spin coating, spraying, roll coating or the like, then drying and heating. In particular, spin coating and flexographic printing are preferable because an alignment layer having a small average surface roughness and excellent smoothness tends to be obtained.

As the alignment layer-forming resin coating material, a solution in which a precursor of the aforesaid polyimide resin, such as polyamic acid, is optionally dispersed or dissolved in an organic solvent such as dimethylacetamide is also employable. When such a solution is used as the alignment layer-forming resin coating material, an alignment layer having a small average surface roughness and excellent smoothness tends to be obtained. In this case, it is necessary to finally heat treating the film to perform polyimidation.

### Liquid crystal 4

As the liquid crystal used in the liquid crystal display cell of the invention, a ferroelectric liquid crystal or an antiferroelectric liquid crystal is preferable.

With regard to such liquid crystals, directions of dipoles, namely, directions of liquid crystal molecules can be instantaneously switched by the positive or negative polarity of a voltage, differently from a nematic liquid crystal which depends upon change of molecular arrangement, and the above-mentioned liquid crystals have high-speed response, memory properties and bistability.

As the ferroelectric liquid crystal, a smectic liquid crystal, particularly a chiral smectic liquid crystal, is recommended, and examples thereof include chiral smectic C phase (SmC*), chiral smectic H phase (SmH*), chiral smectic I phase (SmI*), chiral smectic J phase (SmJ*), chiral smectic K phase (SmK*), chiral smectic G phase (SmG*) and chiral smectic F phase (SmF*).

Examples of the ferroelectric liquid crystals are described later, and the absolute value of spontaneous polarization of the liquid crystal molecule is in the range of preferably 2 to 500 nC/cm², more preferably 3 to 200 nC/cm².

If the absolute value of spontaneous polarization is less than the lower limit of the above range, the response speed becomes insufficient though it depends upon working temperature and viscosity of the liquid crystal.

If the absolute value of spontaneous polarization is more than the upper limit of the above range, viscosity of the liquid crystal tends to be increased, and also in this case, the response speed sometimes becomes insufficient.

Examples of the ferroelectric liquid crystals are given below.

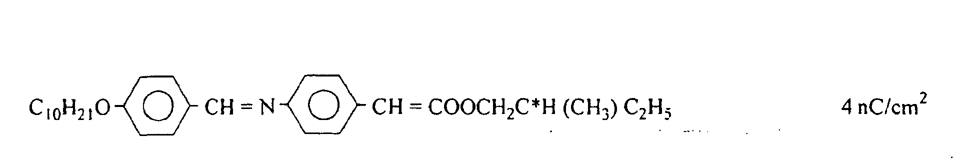

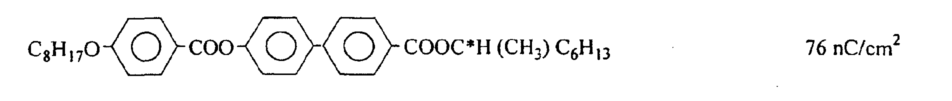

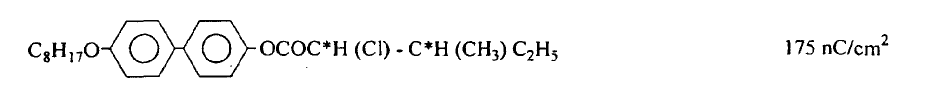

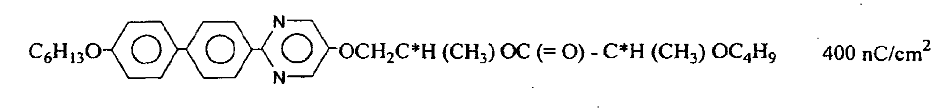

Liquid crystals derived from the above-mentioned liquid crystals are also preferably employed.

An example of the antiferroelectric liquid crystal is given below.

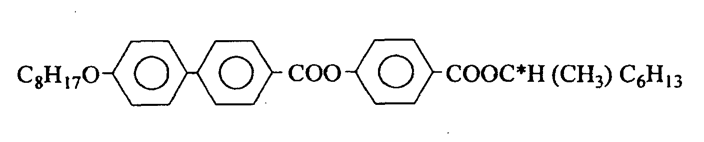

The ferroelectric liquid crystal for use in the invention is also employable for a ferroelectric liquid crystal cell showing V-shaped switching properties (transmittance becomes symmetric to the polarity of a voltage applied for driving) or anti-V-shaped switching properties (transmittance does not become symmetric to the polarity of a voltage applied for driving), when necessary.

### Polymer stabilizer

In the liquid crystal display cell of the invention, a polymer stabilizer may be contained together with the liquid crystal. As the polymer stabilizer, a high-molecular resin is employed. When the polymer stabilizer is contained, a liquid crystal layer showing the V-shaped switching properties or the anti-V-shaped switching properties can be easily formed.

Although the compounding ratio between the liquid crystal and the polymer stabilizer varies depending upon the type of the liquid crystal used, it is desired that the amount of the polymer stabilizer is in the range of 1 to 30% by weight, preferably 2 to 10% by weight, based on the total amount of the liquid crystal and the polymer stabilizer.

If the amount of the polymer stabilizer is less than 1% by weight, the liquid crystal layer cannot be stably held in, for example, a SmC* phase occasionally though it depends upon the type of the liquid crystal used, and even when irradiated with ultraviolet rays, a ferroelectric liquid crystal cell showing the V-shaped switching properties or the anti-V-shaped switching properties cannot be obtained in some cases. If the amount of the polymer stabilizer exceeds 30% by weight, response time, angle of view, bistable memory properties and contrast tend to be lowered because the amount of the polymer stabilizer is too large.

As the polymer stabilizer, an organic resin is employed. Above all, a photo-functional resin is preferable, and an ultraviolet or electron ray curing monovalent or polyvalent acrylate or methacrylate monomer or a mixture thereof is particularly preferable.

Examples of such resins include 1,6-hexanediol acrylate, 2-(2-ethoxyethoxy)ethyl acrylate, stearyl acrylate, 1,3-butanediol acrylate, cyclohexyl methacrylate and indecyl methacrylate.

The liquid crystal layer containing the polymer stabilizer can be obtained by blending the ultraviolet curing resin monomer with a liquid crystal, enclosing the blend between the substrates with transparent electrode film, applying a voltage to hold the liquid crystal layer in a defect-free state such as the aforesaid SmC*, SmH* or SmI* phase and irradiating the liquid crystal layer with ultraviolet rays to cure the ultraviolet curing resin monomer.

In the liquid crystal display cell having the thus obtained liquid crystal layer containing the polymer stabilizer, a defect-free state of the liquid crystal layer can be easily formed, and such a state can be stably maintained. Hence, the liquid crystal display cell has high-speed response, wide angle of view, bistable memory properties and high contrast.

### Spacer

In the liquid crystal display cell of the invention, spacers can be interposed between the transparent electrode films arranged so as to face each other and/or near the peripheries thereof. As the spacers, heretofore known spacers are employable, and for example, inorganic oxide particles such as particles of silica and alumina, organic-inorganic composite particles such as polyorganosiloxane particles, or organic resin particles are employable.

The average particle diameter of the spacers is preferably smaller than a helical pitch of the liquid crystal used, and it is in the range of usually 0.5 to 10 µm, preferably 1 to 5 µm.

When the average particle diameter of the spacers is in the range of 0.5 to 10 µm and the thickness of the liquid crystal layer is smaller than the helical pitch of the liquid crystal, the helical structure of the liquid crystal is dissolved to arrange the liquid crystal molecules in one direction. When a direct-current voltage is applied to the liquid crystal in this state, the directions of dipoles, namely, directions of the liquid crystal molecules can be switched by the positive or negative polarity of the voltage. When the aforesaid ferroelectric liquid crystal or antiferroelectric liquid crystal is used as the liquid crystal, a liquid crystal display cell having a switching time extremely faster than that of the nematic liquid crystal cell and having high-speed response of the order of microsecond can be obtained.

Moreover, a liquid crystal display cell having memory properties such that the arrangement state of the liquid crystal molecules is maintained even after application of a voltage is stopped and having bistability such that the directions of the liquid crystal molecules can be in two stable states can be obtained.

The liquid crystal display cell of the invention can be prepared in the following manner. A transparent electrode film is formed on the surface of a glass substrate, then a transparent film is formed on the surface of the transparent electrode film, and an alignment layer is further formed on the surface of the transparent film, as described above. Then, if desired, the alignment layer is subjected to rubbing treatment once in one direction so that the rubbing directions should become parallel. Thus, a pair of substrates with transparent electrode film are obtained. On the periphery (except liquid crystal pour opening) of one of the substrates, a sealing material is printed, and if necessary, spacer particles are scattered. The substrates are bonded in such a manner that the transparent electrode films face each other. Then, a liquid crystal and if necessary a polymer stabilizer are poured, and the pour opening is sealed with a sealing material.

Examples of the sealing materials include thermosetting resins such as epoxy resin and phenolic resin. In these resins, the spacer particles may be contained, as previously described.

### EFFECT OF THE INVENTION

As described above, the transparent film to constitute the liquid crystal display cell of the invention contains ion-adsorbing inorganic oxide particles having particle diameters of a specific range, and hence the surface of the transparent film formed on the transparent electrode film has excellent smoothness and has excellent adhesion to the hydrophobic alignment layer formed on the transparent film. Further, also the surface of the alignment layer formed on the transparent film is extremely smooth, and hence orientation properties of the liquid crystal are excellent. In particular, the liquid crystal is formed by the use of a polymer stabilizer, and therefore structural defect does not occur for a long period of time. Accordingly, by the use of the liquid crystal display cell of the invention, a display device having high-speed response, bistable memory properties and excellent impact resistance can be obtained.

Moreover, because the transparent film used in the invention contains inorganic oxide particles having inorganic ion adsorption ability, mobil ions in the liquid crystal layer can be adsorbed and decreased. On this account, the liquid crystal display cell of the invention needs only low operating voltage and has excellent voltage retention properties. Accordingly, the liquid crystal display cell of the invention can reduce power consumption and has excellent display ability.

### EXAMPLE

The present invention is further described with reference to the following examples, but it should be construed that the invention is in no way limited to those examples.

### Example 1

### Preparation of transparent film-forming coating solution

To 150 g of ethyl silicate28 (SiO₂ concentration: 28% by weight) as a matrix component precursor, 40 g of butyl cellosolve, 304.4 g of hexylene glycol, 0.4 g of nitric acid having a concentration of 61% by weight and 15 g of pure water were added, and they were stirred at room temperature for 2 hours. To the mixture, 15 g of an amphoteric ion-exchange resin (available from Mitsubishi Chemical Corporation, Diaion) was added, and they were stirred for 1 hour to perform deionization. Thereafter, the amphoteric ion-exchange resin was removed to obtain a dispersion of a partial hydrolyzate (oligomer) of ethyl silicate.

To the dispersion, 90 g of an inorganic ion-adsorbing fine particle sol having a solids concentration of 10% by weight obtained by homogeneously dispersing antimony pentoxide fine particles (Sb₂O₅·2.7H₂O, ion adsorption capability: 2.4 mmol/g) having an average particle diameter of 20 nm as inorganic oxide fine particles in hexylene glycol was added, and they were stirred for 30 minutes. Then, to the mixture, a mixture of 60 g of an isopropyl alcohol solution of diisopropoxy-dioctyloxytitanium (TiO₂ concentration: 10% by weight), 22.2 g of a butanol solution of tributoxy-monoacetylacetonatozirconium (ZrO₂ concentration: 13.5% by weight) and 318 g of hexylene glycol was added, and they were stirred for 48 hours to prepare a transparent film-forming coating solution (A) having a solids concentration of 6.0% by weight.

### Formation of transparent film

A glass substrate having a patterned ITO display electrode (available from Asahi Glass Co., Ltd., product of not more than 30 Ω/□, average surface roughness: 26.6 nm) was coated with the transparent film-forming coating solution (A) by flexographic printing. The coated layer was dried at 90°C for 5 minutes, then irradiated with ultraviolet rays by means of a high-pressure mercury lamp under the conditions of integral light quantity of 6,000 mJ/cm² (measured by a sensor for 365 nm) and then calcined at 300°C for 30 minutes to form a transparent film (A). Measurement of a thickness of the transparent film (A) by a direct contact type surface roughness meter resulted in 70 nm.

An average surface roughness of the transparent film is set forth in Table 2.

### Preparation of liquid crystal display cell

The transparent film (A) was coated with a polyimide film-forming coating material (available from Nissan Chemical Industries, Ltd., RN1199) by flexographic printing. The coated layer was dried at 100°C for 5 minutes and then heated at 240°C for 30 minutes to form an alignment layer (polyimide film). An average surface roughness of the alignment layer and the following adhesion properties were measured. The results are set forth in Table 2.

Then, the alignment layer was subjected to rubbing treatment once in one direction so that the rubbing directions on the upper and the lower substrates should become parallel, whereby one pair of substrates with transparent electrode film in each of which the transparent electrode film, the transparent film (A) and the alignment layer having been subjected to rubbing treatment were laminated successively on the glass substrate were obtained. On a sealing portion of one of the resulting one pair of substrates with transparent electrode film, a sealing material composed of an epoxy resin and silica fine particles (available from Catalysts & Chemicals Industries Co., Ltd., SW-D1, average particle diameter: 1.8 µm) was printed, and these substrates were bonded in such a manner that the transparent electrode films faced each other, followed by pouring a ferroelectric liquid crystal (available from Clariant Japan, FELIX M4851/100, response time: 38 µs, tilt angle:30.5° (room temperature)). Then, the pour opening was sealed with a sealing material to prepare a liquid crystal display cell (A) having a liquid crystal layer thickness of 2 µm.

The resulting liquid crystal display cell (A) was evaluated on the mobil ion quantity, display nonuniformity, presence of structural defect and impact resistance in the following manner.

The results are set forth in Table 2.

### Adhesion properties

On the surface of the alignment layer, 11 parallel lines were scratched in the crosswise and lengthwise directions at regular intervals of 1 mm to form 100 squares, and an adhesive tape (Cellophane tape (trademark)) was applied onto the alignment layer. Then, the adhesive tape was peeled off, and the number of remaining squares of the alignment layer was counted. The number thus counted was classified according to the following four classes to evaluate the adhesion properties of the alignment layer.
AA: The number of remaining squares was 95 or more.
BB: The number of remaining squares was 90 to 94.
CC: The number of remaining squares was 85 to 89.
DD: The number of remaining squares was 84 or less.

### Measurement of mobil ion quantity

The mobil ion quantity in the resulting liquid crystal display cell (A) was measured by an ion density measuring machine (available from Toyo Technica, MTR-1) under the conditions of an applied voltage of 10 V and a triangular wave frequency of 0.1 Hz.

### Observation of presence of structural defect in liquid crystal display cell

Presence of structural defect of the orientated liquid crystal in the resulting liquid crystal display cell (A) was observed by a polarization microscope.
AA: Any defect is not observed at all.
BB: A few defects are observed.
CC: Many defects are observed.

### Impact resistance

The liquid crystal display cell in which any structural defect had not been observed at all was given an impact in a drop test of dropping the cell from the height of 10 cm, and presence of structural defect was observed in the same manner as described above.
AA: Any defect is not observed at all.
BB: A few defects are observed.
CC: Many defects are observed.

### Reproducibility

Formation of a transparent film (A) was carried out on each of 10 substrates, and an average surface roughness of the resulting each transparent film was measured. The mean of the average surface roughness values of the 10 transparent films was 6.9 nm, the maximum value was 7.3 nm, and the minimum value was 6.8 nm.

Then, an alignment layer (A) was formed on each transparent film (A), and an average surface roughness of each of the 10 alignment layers was measured. The mean of the average surface roughness values of the 10 alignment layers was 2.2 nm, the maximum value was 2.3 nm, and the minimum value was 2.1 nm.

### Example 2

A transparent film-forming coating solution (B) was prepared in the same manner as in Example 1, except that silica alumina fine particles (0.75SiO₂·0.25Al₂O₃·0.3H₂O) having an average particle diameter of 25 nm and ion adsorption capability of 0.5 mmol/g obtained by drying silica alumina (available from Catalysts & Chemicals Industries Co., Ltd., USB sol) were used as the inorganic oxide fine particles. Then, a transparent film and an alignment layer were formed in the same manner as in Example 1. Then, an average surface roughness and adhesion properties of the alignment layer were measured in the same manner as in Example 1.

The results are set forth in Table 2.

Further, a liquid crystal display cell (B) was prepared in the same manner as in Example 1. The resulting liquid crystal display cell (B) was evaluated on the mobil ion quantity, presence of structural defect and impact resistance.

The results are set forth in Table 2.

### Example 3

After the same transparent film as in Example 1 was formed, a ferroelectric liquid crystal (available from Clariant Japan, FELIX M4851/100, response time: 38 µs, tilt angle: 30.5° (room temperature)). having been blended with an acrylate monomer UCL-003 (available from Dainippon Ink & Chemicals Inc.) as a photo-functional resin monomer was enclosed to form a liquid crystal layer, and the liquid crystal layer was irradiated with ultraviolet rays (UV wavelength: 365 nm, irradiation intensity: 2 mW/cm²) for 240 seconds with application of a voltage to the liquid crystal cell, to prepare a liquid crystal display cell (C) having a liquid crystal layer thickness of 2 µm.

The resulting liquid crystal display cell (C) was evaluated on the mobil ion quantity, presence of structural defect and impact resistance.

The results are set forth in Table 2.

### Comparative Example 1

### Preparation of transparent film-forming coating solution

To 160 g of ethyl silicate28 (SiO₂ concentration: 28% by weight) as a matrix component precursor, 40 g of butyl cellosolve, 304.4 g of hexylene glycol, 0.4 g of nitric acid having a concentration of 61% by weight and 15 g of pure water were added, and they were stirred at room temperature for 2 hours. To the mixture, 15 g of an amphoteric ion-exchange resin (available from Mitsubishi Chemical Corporation, Diaion) was added, and they were stirred for 1 hour to perform deionization. Thereafter, the amphoteric ion-exchange resin was removed to obtain a dispersion of a partial hydrolyzate (oligomer) of ethyl silicate.

To the dispersion, a mixture of 90 g of an isopropyl alcohol solution of diisopropoxy-dioctyloxytitanium (TiO₂ concentration: 10% by weight), 44.4 g of a butanol solution of tributoxy-monoacetylacetonatozirconium (ZrO₂ concentration: 13.5% by weight) and 265.8 g of hexylene glycol was added, and they were stirred for 48 hours to prepare a transparent film-forming coating solution (B) having a solids concentration of 6.0% by weight.

Then, a liquid crystal display cell (D) was prepared in the same manner as in Example 1, except that the transparent film-forming coating solution (B) was used.

The resulting liquid crystal display cell (D) was evaluated on the mobil ion quantity, presence of structural defect and impact resistance.

The results are set forth in Table 2.

### Reproducibility

Formation of a transparent film (E) was carried out on each of 10 substrates, and an average surface roughness of the resulting each transparent film was measured. The mean of the average surface roughness values of the 10 transparent films was 12.5 nm, the maximum value was 15.3 nm, and the minimum value was 11.8 nm.

Then, an alignment layer (E) was formed on each transparent film (E), and an average surface roughness of each of the 10 alignment layers was measured. The mean of the average surface roughness values of the 10 alignment layers was 3.5 nm, the maximum value was 4.1 nm, and the minimum value was 2.9 nm.

### Comparative Example 2

A transparent film-forming coating solution (C) was prepared in the same manner as in Example 1, except that silica particles (SiO₂·0.1H₂O) having an average particle diameter of 80 nm obtained by drying Cataloid SI-80P (available from Catalysts & Chemicals Industries Co., Ltd.) were used.

Then, a liquid crystal display cell (E) was prepared in the same manner as in Example 1, except that the transparent film-forming coating solution (C) was used.

The resulting liquid crystal display cell (E) was evaluated on the mobil ion quantity, presence of structural defect and impact resistance.

The results are set forth in Table 2.

### Comparative Example 3

A liquid crystal display cell (F) was prepared in the same manner as in Example 3, except that the transparent film was not formed.

The resulting liquid crystal display cell (F) was evaluated on the mobil ion quantity, presence of structural defect and impact resistance.

The results are set forth in Table 2.

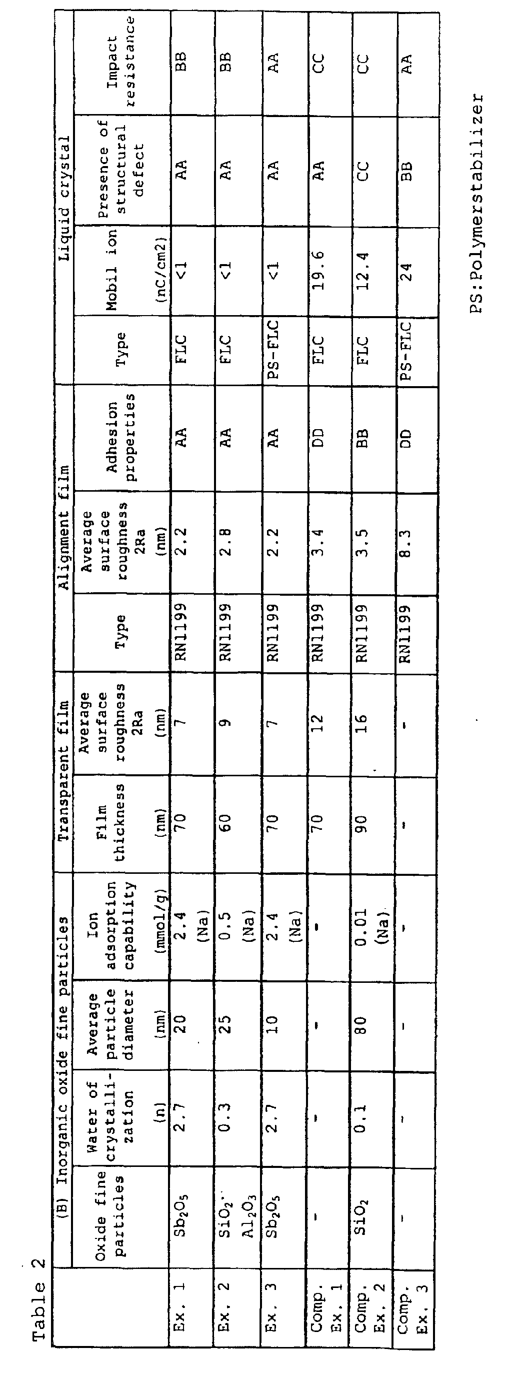

## Claims

1. A liquid crystal display cell comprising a pair of substrates with transparent electrode film and a liquid crystal, at least one of said substrates having a transparent electrode film, a transparent film and an alignment layer laminated successively on a surface of a substrate, said pair of substrates being arranged at a given distance in such a manner that the transparent electrode films face each other, said liquid crystal being enclosed in a gap formed between the pair of substrates with transparent electrode film, wherein:
(i) the transparent film comprises a matrix (A) and ion-adsorbing inorganic oxide fine particles (B),
(ii) the ion-adsorbing inorganic oxide fine particles have an average particle diameter of 1 nm to 50 nm,
(iii) the alignment layer has an average surface roughness of not more than 7 nm, and
(iv) the liquid crystal is a ferroelectric liquid crystal or an antiferroelectric liquid crystal.

2. The liquid crystal display cell as claimed in claim 1, wherein the ferroelectric liquid crystal is a smectic liquid crystal or a chiral smectic liquid crystal.

3. The liquid crystal display cell as claimed in claim 1 or 2, further comprising a polymer stabilizer together with the ferroelectric liquid crystal or the antiferroelectric liquid crystal

4. The liquid crystal display cell as claimed in claim 3, wherein the polymer stabilizer is a photo-functional resin.
